# EUROPEAN PATENT SPECIFICATION

(11) **EP 1 168 062 B1**
(45) Date of publication and mention of the grant of the patent: **23.10.2002**
(21) Application number: 00202217.6
(22) Date of filing: 26.06.2000
(51) Int. Cl.: G03B 42/04

(54) **A cassette assembly for use with roentgen apparatus with automatic exposure control**
Kassettenvorrichtung für einem Roentgengerät mit automatischer Belichtungskontrolle
Assemblage de cassette d'un appareil rx avec contrôle automatique d'exposition

(43) Date of publication of application: 02.01.2002
(73) Proprietor: AGFA-GEVAERT, 2640 Mortsel (BE)
(72) Inventor: Van den Bergh, Rudy c/o Agfa-Gevaert N.V.,, 2640 Mortsel (BE); Van Limbergen, Jurgen, c/o Agfa-Gevaert N.V.,, 2640 Mortsel (BE); Widemann, Ernst, 8060 Dachau (DE); Schmidt, Manfred, 86529 Schrobenhausen (DE); Backhaus, Heinz, 86529 Schrobenhausen (DE)

(56) References cited:
- GB-A- 1 219 612
- GB-A- 2 125 989
- US-A- 4 555 794

## Description

### FIELD OF THE INVENTION

This invention relates to a film/screen system for use in radiography. Particular it relates to a cassette adapted for use with roentgen apparatus with automatic exposure control.

### BACKGROUND OF THE INVENTION

In medical roentgen diagnosis it is very important that the patient is exposed to a radiation dose that is as small as possible and that, given that small dose, the radiologist has a diagnostically useful image. The first requirement, low dose, for the patient leads to the necessity to have the right diagnostic image with the first shot and repeat exposures due to diagnostically meaningless images has to be avoided. The second requirement, getting a readable image with that low dose, leads to the necessity that the exposure time can be adjusted for various patients, e.g. it must be possible to get a good chest image of very slim patient as well as of an obese patient without having to repeat exposure.

The manufacturers of roentgen equipment therefore introduced a phototimer. In an X-ray apparatus the phototimer is placed either in the plane of the cassette or under the cassette depending on the intended use of the X-ray apparatus, e.g., in X-ray apparatus intended for mammography or thorax imaging, the phototimer is placed under (or behind) the cassette. An X-ray apparatus, wherein the phototimer is placed under the cassette operates basically as follows. An X-ray detector is placed under (i.e. on the side of the cassette farthest away from the X-ray tube) the cassette containing the film to be exposed to detect what X-ray dose is not absorbed by the patient and cassette. For every type of examination a threshold value for the dose reaching the phototimer is pre-set. This threshold value is determined by the parameters of the imaging chain (speed of the screens, speed of the film, contrast of the film, processing conditions of the film, etc.) and the parameters of the exposure (X-ray absorption of the body parts to be examined, desired film density and contrast for accurate reading of the picture) The exposure system makes sure that as long as the dose on the phototimer has not reached the pre-set threshold value the X-ray tube will emit X-rays. After a certain time of exposure the phototimer will shut down the X-ray tube. The time of exposure is thus largely governed by the absorption in the patient, in the cassette, in the film and in the intensifying screens. As long as the absorption in the cassette, in the film and in the intensifying screens, is identical from exposure to exposure, the inclusion of the phototimer fulfils its purpose : variations in roentgen absorption of the patient are taken in account so as to have the same density and contrast on the film irrespective of the X-ray absorption of the patient.

In GB-A-1 219 612 a cassette for a radiation-sensitive film, particularly an X-ray film, comprises first and second cassette parts which can be opened and closed relative to one another, a flexible magnetic plate attached to the first cassette part, a magnetic or magnetisable counterfoil flexibly connected to the second cassette part by means of at least one securing element, and an intensifying screen rigidly secured to the counterfoil, the or each securing element being composed of a flexible foil strip having a first part thereof attached to the second cassette part and a second part thereof attached to the counterfoil, the first and second parts being offset from one another. In the Fig. 4 thereof a "back up" lead foil 37 is shown, which prevents backscatter of unabsorbed X-radiation from producing a spurious image on the film.

GB-A-2 125 989 further discloses a cassette arrangement providing a comparatively large degree of movability for a counterfoil/intensifying screen assembly (elements 17 and 18 respectively in the Fig. 1 thereof) in a direction perpendicular to the cassette bottom part, the improvement versus a prior art cassette (comprising first and second parts which can be opened and closed relative to one another, a flexible magnetic plate further being attached to the first cassette part which is substantially the same size as the film, and a ferromagnetic counterfoil flexibly connected to the second cassette part by means of at least one securing element, whereby intensifying screens and said film can be inserted between the magnetic plate and the counterfoil) consisting in that a higher degree of freedom becomes allowable versus too little freedom of movement for the counterfoil and/or the magnetic plate in a direction perpendicular to the cassette bottom for the prior art cassette, entailing a risk that the movable component (the counterfoil or the magnetic plate) would otherwise be damaged or destroyed.

In a "cassette assembly", comprising a cassette, a film, and an intensifying screen, the intensifying screen itself absorbs most of the energy. Thus variations in the absorption of the screen, translate changes to the time the X-ray tube is operated that are not related to the patient, so it is of high importance to produce intensifying screens with very low variation, between batches as within batches, in X-ray absorption. This is especially so for screens having very high X-ray absorption, which is most likely to occur in those diagnostic situations where low energy X-rays are used. This is, e.g., so in mammography, where mostly X-rays with an energy of 27 kVp are used. Cassettes loaded with film and screen(s) absorb then 80 to 90% of the X-rays. When the cassette loaded with film and screen(s) has an X-ray absorption of e.g. 90%, variations of 1% in that absorption will cause a phototimer to keep the X-ray tube open for a time that varies around 10%. This points out that, for high X-ray absorption, small absorption variations of the intensifying screens are enhanced by the phototimer system, so that exposure time variations can be an order of magnitude larger than the variations of the absorption of the system. The variation of the exposure time has an effect on the density of the film that, especially in mammography, are much larger than tolerated by regulations as, e.g., ACR 2002 (US-Norm). Therefor measures for diminishing the variations of the X-ray absorption of a cassette loaded with film and screen(s) to an acceptable low level is very desirable.

### OBJECTS AND SUMMARY OF THE INVENTION

It is an object of the invention to provide a "cassette assembly" with very low variations of the X-ray absorption.

It is a further object of the invention to provide a "cassette assembly" with very low variations of the X-ray absorption for use with X-ray machines wherein a phototimer for automatically exposing the patient is placed under or behind the cassette assembly, i.e. on the side of the "cassette assembly" farthest away from the X-ray tube.

It is a further object of the invention to provide a "cassette assembly" with very low variations of the X-ray absorption for use with X-ray machines emitting X-rays with an energy below 50 kVp.

Further objects and advantages of the invention will become clear from the detailed description herein after.

The objects of the invention are realised by providing a cassette assembly as defined in claim 1 and the claims depending thereupon, and a method of radiography as defined in claim 10.

### DETAILED DESCRIPTION OF THE INVENTION

In this document the wording "compensation element" is used to indicate an X-ray absorbing material that is added to a cassette assembly to non-image-wise increase the X-ray absorption of that cassette assembly.

In this document the wording "cassette assembly" is used to indicate an element for use in roentgen diagnosis that comprises an X-ray cassette and an intensifying screen.

During manufacture of intensifying screens the normal statistical variations in the manufacturing process create variations in the absorption of the intensifying screens. These variations are present within the batches as well as between the batches. The absorption of the different screens can be either normally distributed around an average or not. In both case the screen or screens with the maximum absorption are identified, if necessary after removal of accidental outliers. This maximum absorption is taken as the value of the absorption that has to be the standard for that type of screen.

When the absorption of the screens is normally distributed, then on basis of the fabrication history of several batches of several types of X-ray intensifying screens the 6 sigma interval of the absorption due to statistical fluctuations during the fabrication of the screens, is determined for every type of screens. This 6 sigma interval is determined by irradiating each type of screen with the X-ray energy for which the screen is intended. For each type the upper limit of the 6 sigma interval is taken as the value of the absorption that has to be the standard for that type of screen.

When the absorption of the screens is not normally distributed, then on basis of the fabrication history of several batches of several types of X-ray intensifying screens the range of the absorption due to statistical fluctuations during the fabrication of the screens, is determined for every type of screen, the accidental outliers are removed and the upper limit of the range is taken as the value of the absorption that has to be the standard for that type of screen.

Small differences in X-ray absorption of the screens do have, when the screens are used in a diagnostic method using X-ray of low energy and phototimer switching, a large impact on the switching time of the phototimer. E.g. for screens to be used in mammography, it was determined that the absorption for X-rays with energy around 26 kVp could be considered as normally distributed and had an average value of 90 % and the 6 sigma range ran from 88.5 to 91.5 %. When cassettes loaded with screens with such variations of the absorption where exposed with the same X-ray tube, operated at 26 kVp and 85 mA and with exposure control by a phototimer, the phototimer switched, for a screen with an absorption equal to the average, the tube off after 0.75 sec; for the screen with the lowest absorption the tube was switched off after 0.67 sec, and the screen with the highest absorption the tube was switched off after 0.83 sec. This comes down to a 6 sigma range of ± 12 % around the average value. Since the speed of the screen/film system does not depend in to such an extent to the variations of absorption, the switching of the phototimer can result in unacceptable over or under exposure of the film, which then in turn can lead to either a false diagnosis or to a retake.

It was now found that these (small) variations in absorption of the screen could, when the screen was placed in a cassette assembly, be compensated by adding a compensation element to the cassette assembly. This means that, in screens for mammography as described immediately above, for cassette assemblies incorporating a screen with absorption of 91.5 % , no compensation element was added to the cassette assembly,, while for all other screens a compensation element was added so has to bring the absorption to 91.5 %. The compensation element can be adapted to the absorption of every individual screen so that for every individual screen a dedicated compensation element is available. The range wherein the absorption of the various screens varies due to statistical variations of the manufacturing process, is divided in a number of classes, e.g., five classes. For each of the classes the average absorption is determined and the compensation element adapted to the average absorption of the screens in every one of the classes. When the classes are numbered from A to E, wherein E represents the class with the highest average absorption, then in the cassette assembly using a screen belonging to the classes A to D, a compensation element is added so as to bring the average absorption of the cassette assembly using a screen of those classes to the level of the average absorption of a cassette assembly using screens belonging to class E. The cassette assemblies using screens belonging to class E do in this case not receive any compensation element. Whether the correction for the variations in absorption of the screens is made so that the compensation element is adapted to the absorption of every individual screen or that the correction is only made for a number of classes of screens depends on the quality requirements in terms of density variations on the exposed film in relation to the economic imperatives. When the correction is made for number of classes, also this number depends on the quality requirements in terms of density variations on the exposed film in relation to the economic imperatives.

A compensation element for being added to a cassette assembly according to this invention can take any form, as long as it corrects the absorption of the cassette assembly for statistical variations in the absorption of the intensifying screens. It can, e.g., be a separate foil that is added or adhered in the cassette of the cassette assembly or that is added to the outside the cassette of the cassette assembly, e.g., by adhering this foil to the outside of the cassette by an adhesive. It can also be a material applied to the backside of the screen either by adhering a separate foil to the backside of the screen or by coating an X-ray absorbing layer on that backside. A compensation element for use in a cassette assembly of this invention can further be a material applied to the cassette of the cassette assembly by coating an X-ray absorbing layer on the wall of the cassette, facing the X-ray tube (further on called "tube side") or on the opposite wall (further on called "cover"), or on both. The compensation element for a cassette assembly of this invention can also be incorporated in the tube side or in the cover or in both. The compensation element in a casette assembly of this invention, does not even to be incorporated in the cassette assembly, it can be provided to the customer when selling a casette loaded with a screen and then, when an exposure is made in an X-ray apparatus with phototimer behind the cassette, the customer can insert that compensation element between the cassette and the phototimer.

The compensation element of this invention can be arranged in the cassette assembly so as to have it closer to the X-ray tube than the image forming part of the cassette assembly, i.e., the film/screen combination or it can be arranged so as to have it farther away from the X-ray tube than the image-forming part of the cassette assembly. This latter position is a preferred embodiment of the invention, while then the compensation element does not risk to interfere with the signal to noise ratio of the imaging part.

It is preferred that in a cassette assembly of this invention, the compensation element is either present as a foil positioned in the cassette or that the compensation element is incorporated in the cover of the cassette.

The material used for the compensation element of this invention can be any material that has a sufficient X-ray absorption.

A foil as compensation element
When the element is present as a foil, it can in fact be made of any material that absorbs X-rays. A compensation element for use in this invention can be made, e.g., of a polymeric material, a polymeric material containing a pigment, a polymeric material coated with a pigment containing layer, paper containing a pigment, paper coated with a pigment containing layer and a metal foil. The polymeric material can be a polycondensation polymer as, e.g., polyester, (e.g.,polyethyleneterephathalate, naphthalene terephathalate) polyamide, polyimide, and polycarbonate. The polymeric material can be an addition polymer as, e.g., polyacrylate, polystyrene, polyvinylchloride, etc. When a polymeric material is used as compensation element, it is preferred to use a polymeric material that comprises at least 50 mole % of polymeric moieties incorporating an element with an atomic weight larger than 20. More preferably, a polymeric material for use as compensation element in this invention, comprises at least 50 mole % of polymeric moieties incorporating an element with an atomic weight larger than 30. A typical example of such a preferred polymeric material are polyvinylchloride and addition polymers comprising at least 50 % of moieties derived from chloroethene. It was found that with Polyvinylchloride (PVC)-foils having a thickness ranging from 50 to 300 µm resulted in compensations between 3.6 % and 27%.
Thus the invention encompasses an X-ray cassette containing in order from tube side to back side:
a silver halide film,
an intensifying screen with a phosphor layer coated on the first side of a support, with said phosphor layer contacting said silver halide film and
a polymeric foil made from a polymeric material that comprises at least 50 mole % of polymeric moieties incorporating an element with an atomic weight larger than 20.
When a foil comprising a pigment is used as compensation element, be it as a coated layer or with a pigment incorporated in the mass of the polymer or the paper, it is preferred to use an inorganic compound comprising atoms with an atomic weight higher than 20, preferably equal to or higher than 40. Preferred pigments are salts derived from a metal having an atomic weight higher than 20, preferably equal to or higher than 40. Very preferred pigments are alkaline earth compounds, especially Ba compounds, Zn compounds, rare earth compounds, especially Gd compounds, Y compounds, and La compounds, compounds comprising tungsten or tantalum, and titanium compounds. Most preferred ZnO, CaWO₄, BaSO₄, PbO, Gd₂O₂S, YTaO₄, BaFBr, LaOBr, ZnS and TiO₂ are used as pigment. When a metal foil is used, the metal is preferably Al, Mg and Cu.
In a very suitable embodiment of the invention the compensation element is a plastic foil coated with a dispersion of CaWO₄ in an amount between 0.1 and 3 mg/cm². Adding such a foil to the screen results in compensations between 1 and 12 %. Thus the invention encompasses an X-ray cassette containing in order from tube side to back side:
a silver halide film,
an intensifying screen with a phosphor layer coated on the first side of opaque support, with said phosphor layer contacting said silver halide film and
a polymeric foil having a coating containing between 0.1 and 3 mg/cm² of CaWO₄.
Also adding a foil of Super White Polyethyleneterephthalate (SWP), i.e., polyethyleneterephthalate foils containing at least 10 % by weight of BaSO₄ with respect to the polyethyleneterephthalate, to the screen can result in a correction, depending on the thickness of the SWP-foil, between 1 and 11 %.
Thus the invention encompasses an X-ray cassette containing in order from tube side to back side :
a silver halide film,
an intensifying screen with a phosphor layer coated on a support with said phosphor layer contacting said silver halide film and
a SWP foil with a thickness between 5 and 200 µm as compensation element.

The compensation element as a coating
Intensifying screens are very often coated on a black or non-transparent support and thus it is well feasable to coat a dispersion of pigment in a binder on the back side of the screen. The pigment for use in a dispersion to be coated on the back side of an intensifying screen can be any pigment as enumerated above, and thus the pigment is an inorganic material comprising atoms with an atomic weight higher than 20, preferably equal to or higher than 40. Preferred pigments are salts derived from a metal having an atomic weight higher than 20, preferably equal to or higher than 40. Very preferred pigments are alkaline earth compounds, especially Ba compounds, Zn compounds, rare earth compounds, especially Gd compounds, Y compounds, and La compounds, compounds comprising tungsten or tantalum, and titanium compounds. Most preferred ZnO, CaWO₄, BaSO₄, PbO, Gd₂O₂S, YTaO₄, BaFBr, LaOBr, ZnS and TiO₂ are used as pigment.
In a very useful embodiment of the invention the back side of an intensifying screen, coated on an opaque support, a dispersion of CaWO₄ is used. Although CaWO₄ emits light upon exposure to X-rays, this light will not penetrate the support of the screen and will thus not influence the exposure of the film. This is a very useful embodiment for equalizing the absorption of intensifying screens dedicated for mammography. In this case it is preferred to apply to the backside of the screen between 0.1 and 3 mg/cm2 of CaWO4, which results in compensations between about 1 and 12 %. The dispersion of CaWO4 can be made in any binder known in the art Suitable binders are, e.g., gelatin, polysaccharides such as dextran, gum arabic, and synthetic polymers such as polyvinyl butyral, polyvinyl acetate, nitrocellulose, ethylcellulose, vinylidene chloride-vinyl chloride copolymer, polyalkyl (meth)acrylate, vinyl chloride-vinyl acetate copolymer, polyurethane, cellulose acetate, cellulose acetate butyrate, polyvinyl alcohol, polystyrene, polyester, etc. These and other useful binders are disclosed e.g. in US-A2 502 529, US-A-2 887 379, US-A-3 617 285, US-A-3 300 310, US-A-3 300 311 and US-A-3 743 833. In a preferred embodiment the dispersion of the pigment , especially CaWO4, is made in a UV curable monomer or a mixture of UV curable monomers. Very suitable monomers are EBECRYL 1290 a trade name of UCB OF Belgium for an aliphatic urethane hexaacrylate and EBECRYL 264 a trade name of UCB of Belgium for an alifatic urethane triacrylate. In the mixture a photoinitiator is added, preferably DAROCURE 1173 a trade name of Ciba-Geigy of Switserland for 2-hydroxy-2-methyl-1-phenyl-propan-1-one.
Thus, this invention encompasses an X-ray intensifying screen comprising an opaque support carrying on one side a phosphor layer comprising a prompt emitting phosphor, e.g., a green emitting phosphor as Gd₂O₂S:Tb and on the other side of the support a layer containing a pigment as compensation element. Preferably said pigment is selected from the group consisting of ZnO, CaWO₄, BaSO₄, PbO, Gd₂O₂S, YTaO₄, BaFBr, LaOBr, ZnS and TiO₂. Most preferably said pigment is CaWO₄.
The application of the layer containing a pigment on the back side of the screen can most beneficially proceed by screen printing, which makes it possible to accurately adapt the absorption of the back layer.

A compensation element for a cassette assembly of this invention can also be a coating as described above that is applied on the wall of the cassette, facing the X-ray tube (further on called "tube side") or on the opposite wall (further on called "cover"), or on both. When this is done it is preferred to have the coating applied to the cover of the cassette. It is also possible to incorporate X-ray absorbing materials in the material for manufacturing the cover of the cassette. Thus when the compensation is done by dividing the range wherein the absorption of the various screens varies due to statistical variations of the manufacturing process, in a number of classes, e.g., five classes, five covers with different X-ray absorption are provided. For each of the classes the average absorption is determined and as "compensation element" the absorption of the cover is adapted to the average absorption of the screens in every one of the classes. When the classes are numbered from A to E, wherein E represents the class with the highest average absorption, then in the cassette assembly using a screen belonging to the classes A to D, a cover is used as a "compensation element" that has an X-ray absorption so as to bring the average absorption of the cassette assembly using a screen of those classes to the level of the average absorption of a cassette assembly using screens belonging to class E.

The invention encompasses also a method of radiography as defined in claim 10.

The use of compensation elements according to this invention is explained with intensifying screens, while the invention is most useful with cassettes containing intensifying screens (prompt emitting screens) and silver halide film in contact with said screens. By using a compensation element in a cassette of this invention the reproducibility of the X-ray image becomes almost as good as the reproducibility of an X-ray image acquired by digital radiography with storage phosphor screens, wherein variations in absorption of the screen can electronically be compensated. Thus the present invention bring the reproducibility of classical radiography with prompt emitting screen/film combinations to the level reached in digital radiography with storage phosphor screens.

## Claims

1. A cassette assembly comprising an X-ray cassette with a front and back side, corresponding to a tube side and a cover, and an intensifying screen comprising an opaque support carrying an one side a phosphor layer comprising a prompt emitting phosphor near said backside and an X-ray film with an emulsion layer in contact with said intensifying screen **characterised in that** said cassette assembly further comprises a compensation element for bringing the absorption of X-rays of said intensifying screen to a predetermined nominal value, and a phototimer for registering predetermined X-ray absorption placed behind said back side of said cassette, opposed to said tube side.

2. A cassette assembly according to claim 1, wherein said compensation element is incorporated in said cover of said X-ray cassette.

3. A cassette assembly according to claim 1, wherein said compensation element is a foil added between said intensifying screen and said cover.

4. A cassette assembly according to claim 3, wherein said foil is made from a polymeric material that comprises at least 50 mole % of polymeric moieties incorporating an element with an atomic weight larger than 20.

5. A cassette assembly according to claim 4, wherein said foil is made from polyvinylchloride.

6. A cassette assembly according to claim 3, wherein said foil comprises a pigment selected from the group consisting of inorganic compounds comprising atoms with an atomic weight equal to or higher than 40, wherein said pigment is selected from the group consisting of alkaline earth compounds, Zn compounds, rare earth compounds, compounds comprising tungsten, compounds comprising tantalum, and titanium compounds.

7. A cassette assembly according to claim 6, wherein said foil is selected from the group consisting of a SWP foil with a thickness between 5 and 200 µm and a polymeric foil coated with a dispersion of CaWO₄, in an amount between 0.1 and 3 mg/cm².

8. A cassette assembly according to claim 1, wherein said compensation element is a layer applied to said intensifying screen.

9. A cassette assembly according to claim 1, having on the other side of the support a layer containing an X-ray absorbing pigment selected from the groups consisting of alkaline earth compounds, Zn compounds, rare earth compounds, compounds comprising tungsten, compounds comprising tantalum, and titanium compounds.

10. A method of radiography, comprising the steps of :
- providing a cassette assembly according to claim 1 and a compensation element between the intensifying screen and the backside of the cassette,
- exposing a patient, placed between an X-ray source and the front side of said cassette, by having said X-ray source emitting X-rays having an energy between 20 and 50 kVp,
- registering an X-ray dose in a phototimer placed behind said backside of said cassette and opposed to said X-ray source, and
- said phototimer ending said exposure of said patient when a threshold X-ray dose has been absorbed by said phototimer.

## Patentansprüche

1. Eine Kassettenvorrichtung, die eine Röntgenkassette mit einer Vorderseite und einer Rückseite, die einer Röhrenseite und einem Deckel entsprechen, und einer Verstärkerfolie mit einem lichtundurchlässigen Träger, der an einer Seite eine Leuchtstoffschicht mit einem spontanemittierenden Leuchtstoff nahe an der Rückseite enthält, und einem Röntgenfilm mit einer Emulsionsschicht in Kontakt mit der Verstärkerfolie enthält, **dadurch gekennzeichnet, daß** die Kassettenvorrichtung weiterhin ein Ausgleichselement, mit dem die Absorption von Röntgenstrahlung in der Verstärkerfolie auf einen voreingestellten Nennwert gebracht wird, und einen Fotoschalter, der eine voreingestellte Röntgenabsorption aufzeichnet und hinter der der Röhrenseite gegenüberliegenden Rückseite der Kassette angeordnet ist, enthält.

2. Eine Kassettenvorrichtung nach Anspruch 1, **dadurch gekennzeichnet, daß** das Ausgleichselement in den Deckel der Röntgenkassette eingearbeitet ist.

3. Eine Kassettenvorrichtung nach Anspruch 1, **dadurch gekennzeichnet, daß** das Ausgleichselement eine zwischen die Verstärkerfolie und den Deckel eingefügte Folie ist.

4. Eine Kassettenvorrichtung nach Anspruch 3, **dadurch gekennzeichnet, daß** die Folie aus einem polymeren Material hergestellt ist, das zumindest 50 mol-% polymere Anteile enthält, unter denen ein Element mit einem Atomgewicht von mehr als 20.

5. Eine Kassettenvorrichtung nach Anspruch 4, **dadurch gekennzeichnet, daß** die Folie aus Polyvinylchlorid hergestellt ist.

6. Eine Kassettenvorrichtung nach Anspruch 3, **dadurch gekennzeichnet, daß** die Folie ein Pigment aus der Gruppe bestehend aus anorganischen Verbindungen, die Atome mit einem Atomgewicht höher oder gleich 40 enthalten, enthält, wobei das Pigment aus der Gruppe bestehend aus Erdalkaliverbindungen, Zn-Verbindungen, Seltenerdmetallverbindungen, wolframhaltigen Verbindungen, tantalhaltigen Verbindungen und Titan-Verbindungen gewählt wird.

7. Eine Kassettenvorrichtung nach Anspruch 6, **dadurch gekennzeichnet, daß** die Folie aus der Gruppe bestehend aus einer SWP-Folie mit einer Stärke zwischen 5 und 200 um und einer polymeren Folie, auf die in einer Menge zwischen 0,1 und 3 mg/cm² eine CaWO₄-Dispersion vergossen ist, gewählt wird.

8. Eine Kassettenvorrichtung nach Anspruch 1, **dadurch gekennzeichnet, daß** das Ausgleichselement eine auf die Verstärkerfolie aufgetragene Schicht ist.

9. Eine Kassettenvorrichtung nach Anspruch 1, die an der anderen Seite des Trägers eine Schicht aufweist, die ein Röntgenstrahlung absorbierendes Pigment aus der Gruppe bestehend aus Erdalkaliverbindungen, Zn-Verbindungen, Seltenerdmetallverbindungen, wolframhaltigen Verbindungen, tantalhaltigen Verbindungen und Titan-Verbindungen enthält.

10. Ein durch die nachstehenden Schritte gekennzeichnetes radiografisches Verfahren :
- Bereitstellen einer Kassettenvorrichtung nach Anspruch 1 und eines Ausgleichselements zwischen der Verstärkerfolie und der Rückseite der Kassette,
- Belichtung eines zwischen einer Röntgenquelle und der Vorderseite der Kassette befindlichen Patienten, wobei die Röntgenquelle Röntgenstrahlung mit einer Energie zwischen 20 und 50 kVp emittiert,
- Erfassung einer Röntgendosis in einem hinter der Rückseite der Kassette, gegenüber der Röntgenquelle angeordneten Fotoschalter, und
- fotoschaltergesteuerte Beendung der Belichtung des Patienten im Moment, daß ein Röntgendosis-Schwellenwert vom Fotoschalter absorbiert worden ist.

## Revendications

1. Assemblage de cassette comprenant une cassette radiographique, munie d'un côté frontal et d'un côté dorsal correspondant au côté réservé au tube cathodique et au côté réservé au recouvrement, et un écran renforçateur comprenant un support opaque portant, sur un côté, une couche luminescente comprenant un luminophore à émission instantanée à proximité dudit côté dorsal, et un film radiographique comprenant une couche d'émulsion en contact avec ledit écran renforçateur, **caractérisé en ce que** ledit assemblage de cassette comprend en outre un élément de compensation pour amener l'absorption des rayons X dudit écran renforçateur à une valeur nominale prédéterminée, et une photominuterie pour enregistrer une absorption prédéterminée des rayons X, placée derrière le côté dorsal de ladite cassette, opposé audit côté réservé au tube cathodique.

2. Assemblage de cassette selon la revendication 1, dans lequel ledit élément de compensation est incorporé dans ledit recouvrement de ladite cassette radiographique.

3. Assemblage de cassette selon la revendication 1, dans lequel ledit élément de compensation est une feuille mince ajoutée entre ledit écran renforçateur et ledit recouvrement.

4. Assemblage de cassette selon la revendication 3, dans lequel ladite feuille mince est constituée d'une matière polymère qui comprend des fractions polymères à concurrence d'au moins 50 moles % dans lesquelles est incorporé un élément dont le poids atomique est supérieur à 20.

5. Assemblage de cassette selon la revendication 4, dans lequel ladite feuille mince est constituée de chlorure de polyvinyle.

6. Assemblage de cassette selon la revendication 3, dans lequel ladite feuille mince comprend un pigment choisi parmi le groupe constitué par des composés inorganiques comprenant des atomes dont le poids atomique est égal ou supérieur 40, dans lequel ledit pigment est choisi parmi le groupe constitué par des composés de métaux alcalino-terreux, des composés de zinc, des composés des terres rares, des composés comprenant du tungstène, des composés comprenant du tantale et des composés de titane.

7. Assemblage de cassette selon la revendication 6, dans lequel ladite feuille mince est choisie parmi le groupe constitué par une feuille mince SWP dont l'épaisseur se situe entre 5 et 200 µm et une feuille mince polymère recouverte d'une dispersion de CaWO₄ en une quantité entre 0,1 et 3 mg/cm².

8. Assemblage de cassette selon la revendication 1, dans lequel ledit élément de compensation est une couche appliquée sur ledit écran renforçateur.

9. Assemblage de cassette selon la revendication 1, possédant, sur l'autre côté du support, une couche contenant un pigment absorbant les rayons X choisi parmi le groupe constitué par des composés de métaux alcalino-terreux, des composés de zinc, des composés des terres rares, des composés comprenant du tungstène, des composés comprenant du tantale et des composés de titane.

10. Procédé radiographique, comprenant les étapes consistant à :
- procurer un assemblage de cassette selon la revendication 1 et un élément de compensation entre l'écran renforçateur et le côté dorsal de la cassette,
- exposer un patient, placé entre une source de rayons X et le côté frontal de ladite cassette, de telle sorte que ladite source de rayons X émet des rayons X possédant une énergie entre 20 et 50 kVp,
- enregistrer une dose de rayons X dans une photominuterie placée derrière ledit côté dorsal de ladite cassette et à l'opposé de ladite source de rayons X, et
- ladite photominuterie mettant un terme à ladite exposition dudit patient lorsqu'une dose seuil de rayons X a été absorbée par ladite photominuterie.
